# EUROPÄISCHE PATENTSCHRIFT

(11) **EP 0 610 479 B1**
(45) Veröffentlichungstag und Bekanntmachung des Hinweises auf die Patenterteilung: **06.11.1996**
(21) Anmeldenummer: 93919099.7
(22) Anmeldetag: 19.08.1993
(51) Int. Cl.: E04B 1/41

(54) **ANKERSCHIENE FÜR DIE BAUTECHNIK**
ANCHOR RAIL FOR CONSTRUCTION ENGINEERING
RAIL D'ANCRAGE POUR LA TECHNIQUE DU BATIMENT

(30) Priorität: 27.08.1992 DE 4228464
(43) Veröffentlichungstag der Anmeldung: 17.08.1994
(73) Patentinhaber: Fricker, Siegfried, D-71296 Heimsheim (DE)
(72) Erfinder: Fricker, Siegfried, D-71296 Heimsheim (DE)
(74) Vertreter: Kerkhof, Marianne
(86) Internationale Anmeldenummer: EP9302215
(87) Internationale Veröffentlichungsnummer: WO9405869

(56) Entgegenhaltungen:
- EP-A- 0 275 879
- DE-B- 2 631 396
- DE-C- 2 952 700

## Beschreibung

Die Erfindung betrifft eine Ankerschiene für die Bautechnik mit mindestens einem von ihr abstehenden Anker, dessen Fuß mit der Ankerschiene formschlüssig verbunden ist und der am freien Ende seines Schaftes einen Befestigungsteil aufweist.

Bekannte Ankerschienen dieser Art bestehen aus einem etwa U-oder C-förmigen Schienenprofil mit zwei vom Schienenrücken abstehenden Schenkeln, die an ihren Enden wiederum nach innen oder außen abgebogen sein können. Der Schienenrücken hat in vorgegebenen Abständen Löcher, in welchen massive Anker, meist in Form von Ankerbolzen, durch Materialumformung, insbesondere durch Stauchen ihrer in die Löcher der Schiene eingesteckten Bolzenenden - nachstehend Ankerfüße genannt -, formschlüssig fest verankert sind. In das dem Ankerfuß gegenüberliegende freie Ende jedes Ankerbolzens ist ein Gewinde eingeschnitten, auf das eine Mutter aufgeschraubt oder aufgestaucht wird, die einen Befestigungsteil - nachstehend mit Ankerkopf bezeichnet - bildet. Dieser Befestigungsteil dient dazu, die Schiene im Befestigungsgrund, beispielsweise im Beton, derart fest zu verankern, daß die Traglasten der Ankerschiene über die Ankerbolzen einwandfrei in den Befestigungsgrund eingehen.

Aus der DE-B-2 631 396 ist eine Ankerschiene bekannt, bei der massive profilierte Anker mit ihrem Fuß in Schlitze des Schienenrückens eingesetzt und dort durch Stauchen derart verformt sind, daß der Ankerfuß die Ränder des Schlitzes formschlüssig umgreift.

Aus dem Stand der Technik sind viele, Vorschläge bekannt, um bei solchen seit Jahrzehnten als Standardkonstruktionen zu bezeichnenden Ankerschienen die formschlüssige Verbindung zwischen dem Fuß des Ankerbolzens und dem Loch des Schienenrückens fertigungstechnisch einfach und stabil zu gestalten sowie am freien Ende des Ankerbolzens, also an seinem Ankerkopf, eine Ausbildung zu wählen, die gleichermaßen technisch einfach auszuführen ist und eine einwandfreie Kraftübertragung in den Befestigungsgrund gewährleistet. Die bekannten Ausführungen haben jedoch durchweg den Nachteil, daß zur einwandfreien formschlüssigen Befestigung des Ankerbolzenfußes in der Öffnung der Ankerschiene schwierig durchzuführende und daher fertigungstechnisch sehr aufwendige, teure Materialumformungen des massiven Ankerbolzenfußes sowie des Lochwandabschnittes des Schienenrückens notwendig sind, zumal diese als aufwärts gerichtete Ausformungen kragenartig und unter genauer Anpassung an die Form des Ankerfußes kalt ausgeformt werden müssen. Solche Umformungen der massiven Ankerbolzen, insbesondere im Bereich des Ankerfußes, einschließlich der ihn umschließenden Wandungen erfordern außerdem einen kostenintensiven Einsatz entsprechender Bearbeitungsmaschinen. Um diesen Aufwand und demgemäß auch die Herstellungskosten zu verringern, ist es bekannt, vorgefertigte Senkkopfschrauben mit Konuskopf zu verwenden (vgl. DE-C-34 07 801). Hierbei müssen jedoch die Lochwandabschnitte im Rücken der Ankerschiene derart verformt werden, daß sie den Konusabschnitt der Senkkopfschraube allseits gleichmäßig umfassen und in einen Hals auslaufen, dessen Symmetrieachse senkrecht zur Längsachse der Ankerschiene steht, und der formschlüssig in den unteren Gewindeabschnitt des Bolzens eingreift, wozu in dem ausgeformten Hals ein Innengewinde eingeschnitten werden muß oder eine Verpressung des Halses auf dem Bolzenschaft erforderlich ist.

Aus der DE-A-35 46 107 ist eine Ankerschiene für die Bautechnik bekannt mit auf dem Schienenrücken aufwärts gerichteten Ausformungen mit Öffnungen, in welche eine Senkkopfschräge des Ankerbolzens einliegt und deren Innenfläche durch Materialverformung im Preßsitz zur Mantelfläche des Ankerbolzens liegt. Dabei ist die Öffnungsinnenfläche kegelstumpfförmig mit einem größeren Durchmesser zum Schienenrücken liegend ausgerichtet und der dadurch gebildete Zwickel durch Stauchen eines querschnittsgrößeren, vom Senkkopf ausgehenden Zwischenabschnittes des Ankerbolzens ausgefüllt. Diese Ausbildung erfolgt durch Kaltstauchen, wobei der Stauchdruck sich bis in die Ausformung unter enger Anlage an die Ausformung der Senkkopfschraube fortsetzt.

Es ist auch eine Ankerhülse bekannt (DE-C-2 952 700), die durch Verformen eines Rohrabschnittes hergestellt ist. Das verformte Endteil bildet einen Maueranker, während das gegenüber liegende Ende des Rohrabschnittes ein Innengewinde aufweist. Als Anker für eine Ankerschiene ist diese Ankerhülse nicht vorgesehen und wegen des Gewindeendes nicht geeignet.

Der Erfindung liegt die Aufgabe zugrunde, eine Ankerschiene der gattungsgemäßen Art so auszubilden, daß die nach dem Stand der Technik aufwendigen und technisch komplizierten Materialverformungen erheblich vereinfacht werden können und zudem das für solche Ankerschienen notwendige teure Ankermaterial eingespart und damit auch das Gewicht des Ankers im Vergleich zu den bisherigen Ankerbolzen reduziert werden kann, ohne daß die für solche Ankerschienen geforderte hohe Festigkeit auch nur teilweise verloren geht.

Gelöst wird diese Aufgabe bei einer Ankerschiene der gattungsgemäßen Art mit den kennzeichnenden Merkmalen des Patentanspruches 1.

aus Infolge dieser Ausbildung des Ankerschaftes können die bisher verwendeten teuren, massiven Ankerbolzen auch in Form von vorgefertigten Senkkopfschrauben entfallen, so daß Material und Gewicht eingespart werden. Zudem lassen sich Rohrabschnitte je nach der im Bedarfsfall erforderlichen Länge des Ankerschaftes einfach von einem Rohr als Halbzeug abschneiden und auf dem Ankerschienenrücken in geeigneter Weise formschlüssig befestigen. Dies kann vorteilhaft dadurch geschehen, daß der rohrförmige Ankerfuß eine Öffnung im Rücken der Ankerschiene durchgreift und mit dem Schienenrücken durch mindestens einen Ansatz, vorzugsweise zwei parallel zueinander liegende Ansätze verbunden ist, die durch Umformungen, beispielsweise durch Drücken oder Bördeln, Stauchen oder dgl., hergestellt sind, beispielsweise in Form von Bunden, fingerartigen Krallen, Warzen oder dgl., welche die Öffnung derart übergreifen, daß der Anker mit den übergreifenden Ansätzen formschlüssig auf der Innen- und auf der Außenseite der Ankerschiene aufliegend eingebettet ist, derart, daß dabei der Rand der Öffnung in der Ankerschiene mit ausreichendem Materialüberstand beidseitig fest und unverrückbar umfaßt wird.

Bei einer bevorzugten Ausführung der Erfindung ist der aus rohrförmigem Material hergestellte Ankerschaft zwischen Ankerfuß und Ankerkopf, also in seinem mittleren Bereich, mindestens auf Teilabschnitten, vorzugsweise auf der ganzen Länge des mittleren Bereiches, flach gepreßt. Dabei sind zur Erzielung gewünschter Festigkeiten verschiedene Ausführungsformen möglich, beispielsweise eine solche, bei der die zusammengepreßten Rohrwandabschnitte einen vorgegebenen Abstand haben und/oder zur Erhöhung ihrer Festigkeit zusätzlich mit Rippen versehen sind. Bei der Zusammenpressung der Rohrwandabschnitte können für den Bedarfsfall zweckmäßige Profilierungen vorgesehen werden, beispielsweise kann der Querschnitt eines solchen zusammengepreßten Rohrwandabschnittes oval oder nach Art einer Acht, aber auch eckig ausgebildet sein. Der Schaft selbst kann ein im Querschnitt rundes, ovales, annähernd vier- oder mehreckiges Profil haben. Bei einer besonders zweckmäßigen Ausführungsform sind das Befestigungsteil des Ankers, der Ankerfuß und der zwischen diesen Teilen liegende Ankerschaft einstückig durch Verformung eines einzigen Rohrstückes runden, ovalen oder eckigen Querschnittes hergestellt.

Nachstehend wird die Erfindung anhand einiger Ausführungsbeispiele näher erläutert. Es zeigen:
- Fig. 1: eine nach der Erfindung ausgebildete Ankerschiene mit im Querschnitt rundem Ankerschaft im Schnitt durch die Längsmittelebene der Schiene mit durch Stauchen, Umbördeln oder in ähnlicher Weise verformtem Ankerfuß und Befestigungsteil,
- Fig. 2: eine Ankerschiene im gleichen Schnitt wie Fig. 1 mit flach zusammengedrücktem Ankerschaft und umgeformtem Ankerfuß und Befestigungsteil,
- Fig. 3: eine Ankerschiene im Längsschnitt wie nach Fig. 2 mit einer anderen Ausführung des verformten Ankerkopfes,
- Fig. 4: eine weitere Ausführung des aus einem Rohrabschnitt gebildeten Ankers im Längsmittelschnitt,
- Fig. 5: im Längsschnitt ein Anker mit annähernd rautenförmiger Verformung des Ankerschaftes,
- Fig. 6: eine Schrägansicht auf einen Teilabschnitt einer Ankerschiene mit einem zu einem Profil verpreßten Ankerschaft,
- Fig. 6a: eine Schrägansicht auf einen Anker entsprechend Fig. 1,
- Fig. 7, 7a, 7c, 7d: zeigen verschiedene Querschnittsformen des Ankerschaftes.

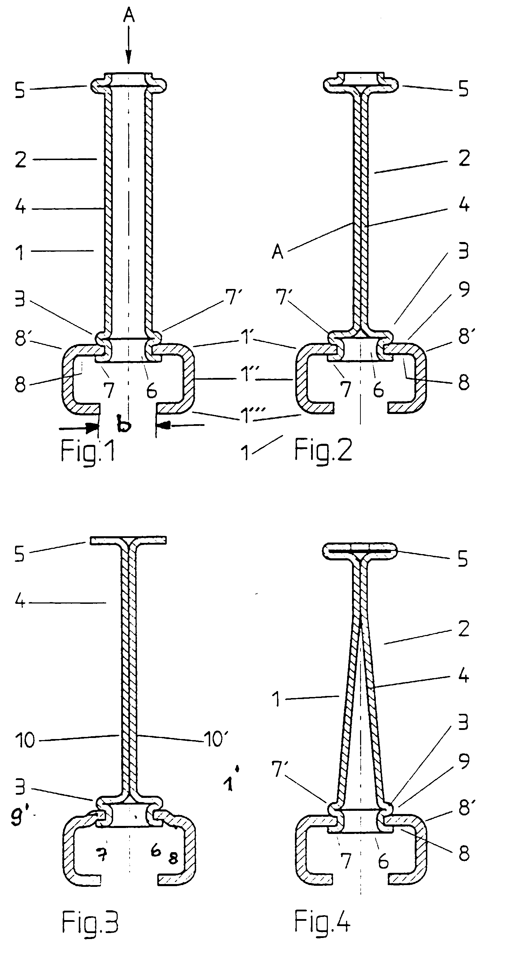

In den Ausführungsbeispielen nach Fig. 1 bis 5 sind Ankerschienen 1 mit etwa U-förmigem Querschnitt gezeigt, wobei der Rücken der Ankerschiene mit 1', die abgebogenen Schenkel mit 1" und die in den Ausführungsbeispielen jeweils nach innen abgebogenen Enden der Schenkel 1" mit 1''' bezeichnet sind. Sie begrenzen einen Längsschlitz L der Ankerschiene von der Breite b. In dem Rücken 1' jeder Ankerschiene befinden sich über ihre Länge gesehen hintereinanderliegende Öffnungen 6, in welchen der erfindungsgemäß ausgebildete, aus rohrförmigem Material hergestellte, Anker 2 mit seinem Ankerfuß 3 formschlüssig befestigt ist. An den Ankerfuß 3 schließt der Ankerschaft 4 an, der auf seiner ganzen Länge aus einem Rohrabschnitt besteht. Am freien Ende des Schaftes 4 befindet sich ein Befestigungsteil 5 zur festen Einbindung des Ankers im Befestigungsgrund, beispielsweise Beton. Hierzu ist der Befestigungsteil 5 gegenüber dem Schaft 4 verbreitert ausgebildet, und zwar derart, daß in Achsrichtung des Schaftes 4 gesehen (vgl. Pfeil A in Fig. 1) der Befestigungsteil den Querschnitt des Schaftes 4 in einem ausreichenden Maße je nach den gegebenen Befestigungsverhältnissen überragt.

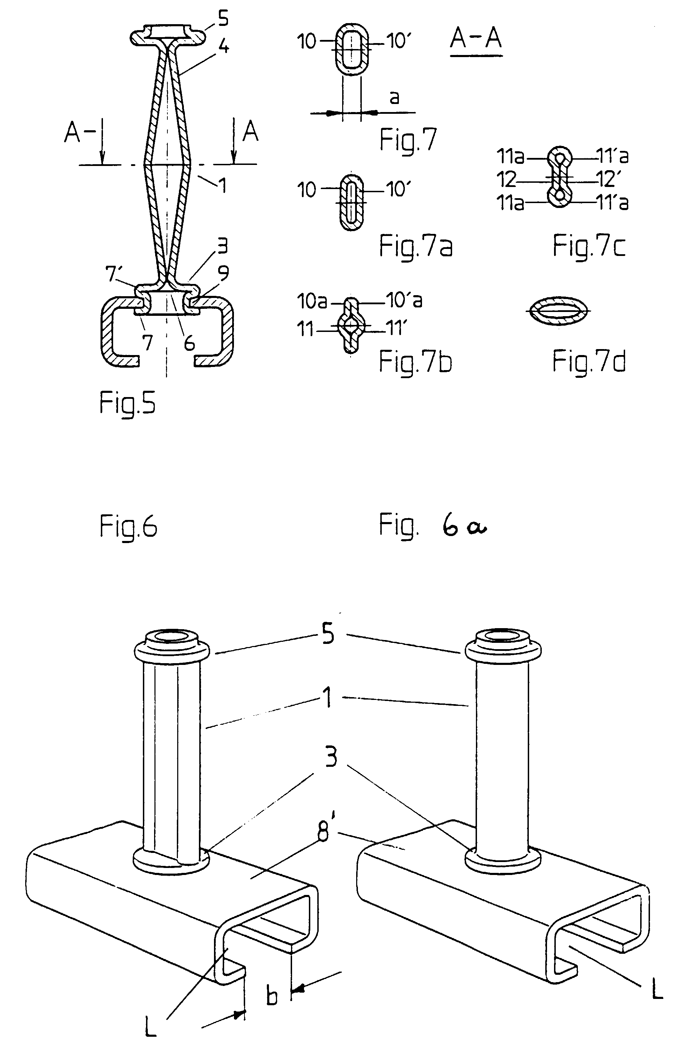

Wie aus den Zeichnungen deutlich erkennbar, ist zumindest der Ankerschaft 4 aus einem Rohrabschnitt gebildet. Dieser Ankerschaft kann, wie die Fig. 1 und 7d zeigen, kreisrunden oder ovalen Querschnitt haben; er kann auch mehreckig oder quadratisch ausgebildet sein. Die Fig. 2 bis 5 zeigen Ankerschäfte 4, die durch Zusammenpressen eines im Querschnitt geeigneten Rohrabschnittes gebildet werden.

Wie aus den Zeichnungen Fig. 1 bis 5 ersichtlich, durchgreift der Ankerfuß 3 die Öffnung 6 in der Ankerschiene 1 und ist an der Innenseite des Ankerschienenrückens 1' in geeigneter Weise formschlüssig befestigt, indem das durchgesteckte Ende des Schaftes 4 mittels eines wenigstens annähernd ringförmigen Ansatzes, vorzugsweise durch einen angeformten Bund 7, die Wandung bzw. den Rand 9 der Öffnung 6 formschlüssig und fest übergreift. Der äußere Rand 9 der Öffnung 6 wird in ähnlicher Weise formschlüssig durch eine geeignete, vorzugsweise angestauchte Verbreiterung des Schaftes 4 übergriffen. In den Fig. 1 bis 5 sind bevorzugte Ausführungsformen dargestellt, bei denen die Öffnung 6 von zwei parallel zueinander liegenden Bunden 7, 7' übergriffen wird, die auf der Innenseite 8 und auf der Außenseite 8' der Ankerschiene dicht aufliegen und den Rand 9 der Öffnung 6 innen und außen umfassen, derart, daß der Ankerfuß 3 unverrückbar fest in der Ankerschiene befestigt ist. Anstelle von Rundbunden 7, 7' können andere Formen von Ansätzen, z.B. fingerartige Krallen, Noppen, Warzen oder dgl. vorgesehen werden.

Die Ansätze, bei dem dargestellten Ausführungsbeispiel die Rundbunde 7, 7', sind durch plastische Verformung des rohrförmigen unteren Abschnittes des Ankerfußes 3 gebildet, was zweckmäßig durch Kaltverpressen beispielsweise im Wege des Stauchens, Umbördelns, Zusammenfügens oder in ähnlicher Weise erfolgen kann.

Eine vorteilhafte Ausführung der Erfindung besteht darin, daß der ursprünglich rohrförmige Ankerschaft 4 in seinem mittleren Bereich wenigstens auf Teilabschnitten, vorzugsweise auf seiner ganzen Länge, also in dem Abschnitt zwischen Ankerfuß 3 und Befestigungsteil 5, flach verpreßt ist, wie dies in den Fig. 2, 3, 4 und 5 dargestellt ist. Durch die Zusammenpressung erhalten die Anker eine hohe Festigkeit bei vergleichsweise geringer Wandstärke und sind so für die Anordnung einer Bewehrung im Befestigungsgrund wenig störend. Bei dieser Verformung können dem Ankerschaft 4 je nach Ausgangsmaterial bzw. Verwendungszweck beliebige geeignete Profilquerschnitte gegeben werden. Beispielsweise können die flach zusammengepreßten Rohrwandabschnitte 10, 10' des Ankerschaftes 4, wie in Fig. 7 dargestellt ist, einen vorgegebenen Abstand a zueinander haben oder dicht aufeinandergepreßt sein, wie dies in Fig. 7a gezeigt ist.

Der ursprünglich rohrförmige Ankerschaft kann auch in der Weise zusammengepreßt werden, daß Rohrwandabschnitte 10a, 10'a entstehen, die im Querschnitt mindestens eine Erhöhung, vorzugsweise zwei oder mehr symmetrisch zueinander verlaufende rippenartige Erhöhungen bzw. Längsprofile 11, 11' zur Erhöhung der Steifigkeit des Schaftes aufweisen, wie dies beispielsweise in den Fig. 7b, 7c dargestellt ist. Dabei können die rippenartigen Längsprofile 11, 11' bzw. 11a, 11'a zur Vermeidung von Kerb- und Rissgefahr im Querschnitt abgerundet sein und neben bzw. zwischen flachen Profilabschnitten 10a, 10'a bzw. 12, 12' liegen, wie dies ebenfalls aus den Fig. 7b und 7c ersichtlich ist. Bei der Ausführungsform nach Fig. 7c befinden sich zwischen zwei rippenartigen, im Querschnitt annähernd runden und sich gegenüberliegenden Randbereichen lla und ll'a flache Längsabschnitte 12 und 12', wodurch der zusammengepreßte Rohrschaft im Querschnitt etwa achtförmig ausgebildet ist. Fig. 7d zeigt einen Querschnitt durch einen rohrförmigen Schaft 4 mit rundem Querschnitt.

Je nach den gegebenen Verhältnissen hinsichtlich Festigkeit, Materialeinsatz und/oder Verwendungszweck lassen sich verschiedene Querschnittsformen des zu verpressenden Schaftes 4 herstellen. So zeigt Fig. 4 eine Flachpressung des ursprünglich rohrförmigen Schaftes 4, derart, daß vom Fuß 3 ausgehend bis zum Befestigungsteil 5 hin der Schaft konisch verjüngt verläuft. In Fig. 5 ist eine Ausführung dargestellt, bei der der wenigstens annähernd flach gepreßte Schaft 4 vom Ankerfuß 3 bis zum Befestigungsteil 5 hin einen etwa rautenförmigen Längsquerschnitt hat.

Die Befestigungsteile am Kopf jedes Ankers sind, wie schon erwähnt, gegenüber dem Ankerschaft 4 verbreitert ausgeführt und in bevorzugter Ausführung aus dem selben Rohrabschnitt wie der Ankerschaft 4 derart geformt, daß ein verbreiterter Doppelbund 5 gebildet wird, wie dies in Fig. 1 und den Fig. 4 und 5 im Schnitt gezeigt ist. Bei der Ausführung nach Fig. 3 ist der Befestigungsteil 5 durch einmaliges Umformen jedes einzelnen der aufeinanderliegenden Wandteile des Schaftes 4 gebildet. Grundsätzlich ist jede geeignete verformung des Befestigungsteiles 5 bzw. des Ankerfußes 3 möglich. Statt durch Verformung des Rohrabschnittes kann der Befestigungsteil auch als getrenntes Teil hergestellt und mit dem Schaft 4 fest verbunden werden.

Besonders günstig ist aber die Ausführung der Ankerschiene, bei der der Anker 2, bestehend aus Befestigungsteil 5, Schaft 4 und Ankerfuß 3, als ganzes durch Verformung eines einzigen Rohrstückes mit beliebigem, also rundem, ovalem oder eckigem, Querschnitt gebildet wird. Der formschlüssigen Verbindung zwischen Ankerfuß 3 und Ankerschiene kann eine besonders hohe Festigkeit dadurch gegeben werden, daß mindestens der die Öffnung 6 innerhalb der Ankerschiene 1 hintergreifende Ansatz 7, nämlich Bund, Warze, Kralle oder dgl., eine Ausdehnung hat, die breiter gehalten ist als die Breite b des Längsschlitzes L der Ankerschiene 1. Dies ist möglich, wenn der zur Stauchung bzw. Bördelung des innen liegenden Bundes 7 verwendete Rollstempel mindestens annähernd einen Durchmesser von der Breite b des Längsschlitzes L hat, so daß beim Stauchvorgang der aus der Öffnung 6 vorstehende Überstand des rohrförmigen Schaftes eine größtmögliche Umbördelung erfährt.

Nach einem weiteren Merkmal läßt sich bei der erfindungsgemäßen Ankerschiene ihre volle lichte Weite trotz Anordnung von Ansätzen, beispielsweise in Form von Bunden 7, dadurch erreichen, daß der Randbereich 9' der Öffnung 6 derart nach außen ausgeformt wird, daß der angeformte Ansatz 7 wenigstens annähernd bündig mit der Innenseite der Ankerschiene abschließt, also nicht in den Innenraum der Schieneragt, so daß die den Formschluß bewirkende Hinterschneidung nämlich der Bund 7, den lichten Querschnitt der Ankerschiene nicht verengt.

Im Bedarfsfall ist es möglich, in einfacher Weise die formschlüssige Verankerung von Ankerfuß 3 und Schienenrücken 1' dadurch in ihrer Festigkeit zu erhöhen, daß beiderseits der formschlüssigen Verbindung zwischen Schaft 4 und Rückwand der Ankerschiene 1 versteifende Ausprägungen angebracht werden. Fig. 6 zeigt gleichfalls eine zweckmäßige Ausführungsform, bei der der auf der Außenseite 8' der Ankerschiene 1 befindliche Bund derart oval ausgebildet ist, daß seine längere Achse in Längsrichtung der Ankerschiene liegt. Um eine möglichst große lichte Weite der Ankerschiene beizubehalten, empfiehlt es sich, daß der an der Innenseite 8 der Ankerschiene 1 befindliche kreis- oder ovalförmige Bund 7 möglichst flach ausgebildet wird, derart, daß er nur geringfügig, vorzugsweise nur wenige Millimeter, über die innere Fläche 8 der Ankerschiene 1 vorsteht.

Durch die Erfindung ist eine Ankerschiene geschaffen, bei der der Anker selbst durch Verformung eines Rohrabschnittes hergestellt wird, wofür vergleichsweise niedrige Verformungskräfte genügen. Die Herstellung erfordert im Vergleich zum Stand der Technik einen erheblich einfacheren Maschinenaufwand und geringere Fertigungszeiten. Die Anker werden unter Materialeinsparung mit wenigen Umformschritten des rohrförmigen Materials hergestellt, ohne daß Abstriche hinsichtlich der Stabilität und Festigkeit der Ankerschiene gemacht werden müssen.

## Patentansprüche

1. Ankerschiene für die Bautechnik mit mindestens einem von ihr abstehenden Anker (2), dessen Fuß (3) mit der Ankerschiene (1) formschlüssig verbunden ist und der am freien Ende seines Schaftes (4) einen Befestigungsteil (5) aufweist,
dadurch gekennzeichnet, daß mindestens der Ankerschaft (4) in seiner gesamten Länge aus einem rohrförmigen Material gebildet ist.

2. Ankerschiene nach Anspruch 1,
dadurch gekennzeichnet, daß der ebenfalls rohrförmige Ankerfuß (3) eine Öffnung (6) der Ankerschiene (1) durchgreift und diese mit mindestens einem aus seinem Ende geformten Ansatz (7) formschlüssig übergreift.

3. Ankerschiene nach Anspruch 2,
dadurch gekennzeichnet, daß die Öffnung (6) von zwei annähernd parallel zueinander liegenden Ansätzen des Ankerfußes (3), vorzugsweise in Form von Bunden (7, 7'), Warzen, Krallen oder dgl., umgriffen ist, wobei diese Ansätze auf der Innen-(8) und auf der Außenseite (8') der Ankerschiene (1) aufliegen und den Rand (9) der Öffnung (6) beidseitig umfassen.

4. Ankerschiene nach Anspruch 2 oder 3,
dadurch gekennzeichnet, daß die Ansätze wie Bunde (7, 7'), Warzen, Krallen oder dgl. durch plastische Verformung des Ankerfußes (3), vorzugsweise durch Stauchen und/oder Umbördeln des unteren Bereiches des rohrförmigen Ankerschaftes (4) gebildet sind.

5. Ankerschiene nach einem der Ansprüche 1 bis 4,
dadurch gekennzeichnet, daß der Ankerschaft (4) in seinem mittleren Bereich mindestens auf Teilabschnitten flach gepreßt ist.

6. Ankerschiene nach einem der Ansprüche 1 bis 5,
dadurch gekennzeichnet, daß der Ankerschaft (4) auf seiner ganzen Länge zwischen Ankerfuß (3) und Befestigungsteil (5) flach verpreßt ist.

7. Ankerschiene nach Anspruch 5 oder 6,
dadurch gekennzeichnet, daß die flach gepreßten Rohrwandabschnitte (10, 10') des Ankerschaftes (4) einen Abstand (a) zueinander aufweisen.

8. Ankerschiene nach Anspruch 5 oder 6,
dadurch gekennzeichnet, daß der Ankerschaft (4) zwei flache, dicht aneinanderliegende parallele Rohrwandabschnitte (10, 10') aufweist.

9. Ankerschiene nach einem der Ansprüche 5 bis 8,
dadurch gekennzeichnet, daß die zusammengepreßten Rohrwandabschnitte (10a, 10'a) im Querschnitt mindestens ein rippenartiges Längsprofil, vorzugsweise zwei symmetrisch zueinander verlaufende rippenartige Längsprofile (11, 11') haben.

10. Ankerschiene nach Anspruch 9,
dadurch gekennzeichnet, daß die rippenartigen, vorzugsweise abgerundeten Längsprofile (11, 11' bzw. 11a, 11'a) neben flachen Profilabschnitten (10a, 10'a bzw. 12, 12') liegen.

11. Ankerschiene nach Anspruch 9,
dadurch gekennzeichnet, daß zwischen zwei rippenartigen, im Querschnitt annähernd rund ausgebildeten, sich gegenüberliegenden Randbereichen (11a, 11'a) annähernd flache Längsabschnitte (12, 12') des zusammengepreßten Ankerschaftes (4) liegen.

12. Ankerschiene nach einem der Ansprüche 1 bis 4,
dadurch gekennzeichnet, daß der Schaft (4) ein im Querschnitt rundes oder ovales oder annähernd vier- oder mehreckiges Profil hat.

13. Ankerschiene nach einem der Ansprüche 5 bis 12,
dadurch gekennzeichnet, daß der wenigstens annähernd flach gepreßte Schaft (4) vom Ankerfuß (3) zum Befestigungsteil (5) hin konisch verjüngt ausgebildet ist.

14. Ankerschiene nach einem der Ansprüche 5 bis 7 und 9 bis 12,
dadurch gekennzeichnet, daß der wenigstens annähernd flach gepreßte Schaft (4) vom Ankerfuß (3) bis zum Befestigungsteil (5) hin im Längsschnitt wenigstens annähernd rautenförmig ist.

15. Ankerschiene nach einem der Ansprüche 1 bis 14,
dadurch gekennzeichnet, daß der Befestigungsteil (5) gegenüber dem Querschnitt des Ankerschaftes (4) verbreitert ausgeführt ist.

16. Ankerschiene nach Anspruch 15,
dadurch gekennzeichnet, daß der Befestigungsteil (5) aus dem rohrförmigen Ende des Ankerschaftes (4) geformt ist, vorzugsweise derart, daß der Ankerschaft (4) einen verbreiterten Doppelbund (5') aufweist.

17. Ankerschiene nach einem der Ansprüche 1 bis 16,
dadurch gekennzeichnet, daß Befestigungsteil (5), Schaft (4) und Ankerfuß (3) einstückig durch Verformung eines einzigen Rohrstückes runden, ovalen oder eckigen Querschnittes gebildet sind.

18. Ankerschiene nach einem der Ansprüche 3 bis 17,
dadurch gekennzeichnet, daß der auf der Außenseite (8') der Ankerschiene (1) liegende Bund (7') derart oval ausgebildet ist, daß seine längere Achse in Längsrichtung der Ankerschiene liegt.

19. Ankerschiene nach einem der Ansprüche 2 bis 18,
dadurch gekennzeichnet, daß mindestens der die Öffnung (6) innerhalb der Ankerschiene (1) übergreifende Ansatz, Bund (7), Warze, Kralle oder dgl., größer ist als die Breite (b) des Längsschlitzes (L) der Ankerschiene (1).

20. Ankerschiene nach einem der Ansprüche 2 bis 19,
dadurch gekennzeichnet, daß der Randbereich (9') der Öffnung (6) zur Aufnahme des inneren Ansatzes (7) derart nach außen ausgeformt ist, daß dieser Ansatz mindestens annähernd bündig mit der Innenseite (8) des Ankerschienenrückens (1') abschließt.

21. Ankerschiene nach einem der Ansprüche 1 bis 20,
dadurch gekennzeichnet, daß beiderseits der formschlüssigen Verbindung zwischen Schaft (4) und Rückwand der Ankerschiene (1) versteifende Ausprägungen vorgesehen sind.

## Claims

1. An anchor rail for construction engineering including at least one anchor (2) projecting from the same, with its foot (3) being in firm contact with an anchor rail (1), including a fastening (5) at the free end of its shaft (4), wherein at least the full length of an anchor shaft (4) is designed of a tubular material.

2. An anchor rail according to Claim 1, wherein the anchor foot (3), which is also tubular, passes through an aperture (6) in an anchor rail (1), overlapping the same in firm contact with at least one projection (7) moulded to its end.

3. An anchor rail according to Claim 2, wherein an aperture (6) is surrounded by two projections of an anchor foot (3) provided approximately parallel to each other, preferably by collars (7,7'), buttons, claws or similar, with these projections being located on the inside (8) and outside (8') of an anchor rail (1) and surrounding an edge (9) of an aperture (6) on either side.

4. An anchor rail according to Claims 2 or 3, wherein projections, such as collars (7, 7'), buttons, claws or similar are designed as plastic deformations of an anchor foot (3), preferably by upsetting and/or beading of the lower section of a tubular anchor shaft (4).

5. An anchor rail according to one of Claims 1 to 4, wherein an anchor shaft (4) is moulded flat at least over one partial section of its central area.

6. An anchor rail according to one of Claims 1 to 4, wherein an anchor shaft (4) is moulded flat over its full length between an anchor foot (3) and a fastener (5).

7. An anchor rail according to Claims 5 or 6, wherein flat moulded tubular wall sections (10, 10') of an anchor shaft (4) are provided at a distance (a) from each other.

8. An anchor rail according to Claims 5 or 6, wherein an anchor shaft (4) includes two flat tubular wall sections (10, 10') provided closely adjacent to each other.

9. An anchor rail according to one of Claims 5 to 8, wherein compressed tubular wall sections (10a, 10'a) include a minimum of one rib-shaped longitudinal section, preferably two rib-shaped longitudinal sections (11, 11') provided symmetrically to each other.

10. An anchor rail according to Claim 9, wherein rib-shaped, preferably rounded longitudinal sections (11, 11' and/or 11a, 11'a) are located next to flat sectional contours (10a, 10'a and/or 12, 12').

11. An anchor rail according to Claim 9, wherein approximately flat longitudinal sections (12, 12') of a compressed anchor shaft (4) are provided between two rib-type marginal areas (11a, 11'a), having an approximately round contour.

12. An anchor rail according to one of Claims 1 to 4, wherein the section of a shaft (4) is round or oval or approximately square or polygonal.

13. An anchor rail according to one of Claims 5 to 12, wherein an at least approximately flat compressed shaft (4) is tapered and reduced from an anchor foot (3) towards a fastener (5).

14. An anchor rail according to one of Claims 5 to 7 and 9 to 12, wherein an at least approximately flat compressed shaft (4) is at least approximately lozenge-shaped between an anchor foot (3) and a fastener (5) in longitudinal section.

15. An anchor rail according to one of Claims 1 to 14, wherein a fastener (5) is widened in relation to the section of an anchor shaft (4).

16. An anchor rail according to Claim 15, wherein a fastener (5) is moulded from the tubular end of an anchor shaft (4), preferably allowing the said anchor shaft (4) to include a widened double collar (5').

17. An anchor shaft according to one of Claims 1 to 16, wherein a fastener (5), a shaft (4) and an anchor foot (3) are integral part of a tubular moulding having a round, oval or polygonal section.

18. An anchor rail according to one of claims 3 to 17, wherein a collar (7') provided on the outside (8') of an anchor rail (1) is provide as an oval shape, with its longer axis being positioned in a longitudinal direction of an anchor rail.

19. An anchor rail according to one of Claims 2 to 18, wherein at least one of the projections, a collar (7), a button, a claw or similar overlapping at least an aperture (6) within an anchor rail (1) is larger than the width (3) of a longitudinal slot (L) of an anchor rail (1).

20. An anchor rail according to one of Claims 2 to 19, wherein a marginal area (9') of an aperture (6) to accommodate an internal projection (7) has been moulded towards the outside, allowing the said projection to be at least approximately flush with the inside (8) of the back of an anchor rail (1').

21. An anchor rail according to one of Claims 1 to 20, wherein the connection between a shaft (4) and the rear wall of an anchor rail (1), which is at least in close contact on either side, includes reinforcing projections.

## Revendications

1. Barre d'ancrage pour le bâtiment et les travaux publics, comportant au moins une ancre (2) qui fait saillie d'elle, dont le pied (3) est joint par emboîtement à elle et qui présente une partie de fixation (5) à l'extrémité libre de sa tige (4), caractérisée par le fait qu'au moins la tige (4) de l'ancre est formée sur toute sa longueur d'une matière tubulaire.

2. Barre d'ancrage selon la revendication 1, caractérisée par le fait que le pied (3), également tubulaire, de l'ancre passe à travers une ouverture (6) de la barre d'ancrage (1) et recouvre celle-ci par encastrement par au moins un appendice (7) fait à son extrémité.

3. Barre d'ancrage selon la revendication 2, caractérisée par le fait que l'ouverture (6) est entourée par deux appendices, approximativement parallèles, du pied (3) de l'ancre, de préférence formés de collets (7, 7'), de boutons, de griffes ou d'éléments semblables, ces appendices s'appuyant sur la face intérieure (8) et sur la face extérieure (8') de la barre d'ancrage (1) et enserrant des deux côtés le bord (9) de l'ouverture (6).

4. Barre d'ancrage selon l'une des revendications 2 et 3, caractérisée par le fait que les appendices, tels que collets (7, 7'), boutons, griffes ou éléments semblables, sont formés par déformation plastique du pied (3) de l'ancre, de préférence par refoulement et/ou rabattement de la partie inférieure de la tige tubulaire (4) de l'ancre.

5. Barre d'ancrage selon l'une des revendications 1 à 4, caractérisée par le fait que la tige (4) de l'ancre est, dans sa partie médiane, aplatie par compression au moins dans certaines parties.

6. Barre d'ancrage selon l'une des revendications 1 à 5, caractérisée par le fait que la tige (4) de l'ancre est aplatie par compression sur toute sa longueur entre le pied (3) de l'ancre et la partie de fixation (5).

7. Barre d'ancrage selon l'une des revendications 5 et 6, caractérisée par le fait que les parties de paroi tubulaire aplaties par compression (10, 10') de la tige (4) de l'ancre sont à une certaine distance (a) l'une de l'autre.

8. Barre d'ancrage selon l'une des revendications 5 et 6, caractérisée par le fait que la tige (4) de l'ancre présente deux parties de paroi tubulaire plates parallèles (10, 10') situées tout près l'une de l'autre.

9. Barre d'ancrage selon l'une des revendications 5 à 8, caractérisée par le fait que les parties de paroi tubulaire comprimées (10a, 10'a) ont en coupe transversale au moins un profil longitudinal du genre nervure, de préférence deux profils longitudinaux du genre nervure s'étendant symétriquement l'un par rapport à l'autre (11, 11').

10. Barre d'ancrage selon la revendication 9, caractérisée par le fait que les profils longitudinaux du genre nervure (11, 11' ou 11, 11'a), de préférence arrondis, sont situés près de parties de profil plates (10a, 10'a ou 12, 12').

11. Barre d'ancrage selon la revendication 9, caractérisée par le fait qu'entre deux parties de bord du genre nervure de section approximativement ronde opposées (11a, 11'a) se trouvent des parties longitudinales approximativement plates (12, 12') de la tige comprimée (4) de l'ancre.

12. Barre d'ancrage selon l'une des revendications 1 à 4, caractérisée par le fait que la tige (4) a un profil de section ronde ou ovale ou approximativement carrée ou polygonale.

13. Barre d'ancrage selon l'une des revendications 5 à 12, caractérisée par le fait que la tige au moins approximativement aplatie par compression (4) se rétrécit de manière conique du pied (3) de l'ancre vers la partie de fixation (5).

14. Barre d'ancrage selon l'une des revendications 5 à 7 et 9 à 12, caractérisée par le fait que la tige au moins approximativement aplatie par compression (4) est, en coupe longitudinale, au moins approximativement en forme de losange du pied (3) de l'ancre jusqu'à la partie de fixation (5).

15. Barre d'ancrage selon l'une des revendications 1 à 14, caractérisée par le fait que la partie de fixation (5) est élargie par rapport à la section de la tige (4) de l'ancre.

16. Barre d'ancrage selon la revendication 15, caractérisée par le fait que la partie de fixation (5) est formée à partir de l'extrémité tubulaire de la tige (4) de l'ancre, de préférence de façon telle que la tige (4) de l'ancre présente un double collet élargi (5').

17. Barre d'ancrage selon l'une des revendications 1 à 16, caractérisée par le fait que la partie de fixation (5), la tige (4) et le pied (3) de l'ancre sont formés d'une seule pièce par déformation d'un morceau de tube unique de section ronde, ovale ou anguleuse.

18. Barre d'ancrage selon l'une des revendications 3 à 17, caractérisée par le fait que le collet (7') appuyé sur la face extérieure (8') de la barre d'ancrage (1) est ovale de façon telle que son grand axe soit orienté dans la direction longitudinale de la barre d'ancrage.

19. Barre d'ancrage selon l'une des revendications 2 à 18, caractérisée par le fait qu'au moins l'appendice, collet (7), bouton, griffe ou élément semblable, qui recouvre l'ouverture (6) à l'intérieur de la barre d'ancrage (1) est plus grand que la largeur (b) de la fente longitudinale (L) de la barre d'ancrage (1).

20. Barre d'ancrage selon l'une des revendications 2 à 19, caractérisée par le fait que la partie de bord (9') de l'ouverture (6) est déformée vers l'extérieur pour recevoir l'appendice intérieur (7) de façon telle que cet appendice affleure au moins approximativement la face intérieure (8) du dos (1') de la barre d'ancrage.

21. Barre d'ancrage selon l'une des revendications 1 à 20, caractérisée par le fait que des deux côtés de l'encastrement entre la tige (4) et la paroi arrière de la barre d'ancrage (1) sont prévues des empreintes de renfort.
